# EUROPEAN PATENT APPLICATION

(11) **EP 4 814 061 A1**
(43) Date of publication of application: **30.09.2026**
(21) Application number: 24893726.0
(22) Date of filing: 30.12.2024
(51) Int. Cl.: C09D 1/00, C09D 7/40, C08K 3/013, C09D 7/61, C08K 3/36, H01B 3/02, H01B 3/10, C21D 8/12

(54) **INSULATION COATING COMPOSITION FOR ELECTRICAL STEEL SHEET, ELECTRICAL STEEL SHEET, AND MANUFACTURING METHOD THEREFOR**

(30) Priority: 24.11.2023 KR 20230165029
(71) Applicant: POSCO Co., Ltd, Gyeongsangbuk-do 37859 (KR)
(72) Inventor: KIM, Hyunjong, Pohang-si, Gyeongsangbuk-do 37859 (KR); NO, Taeyoung, Pohang-si, Gyeongsangbuk-do 37859 (KR)
(74) Representative: Meissner Bolte Partnerschaft mbB
(86) International application number: PCT/IB2024/063274
(87) International publication number: WO 2025/109573

(57) **Abstract**

An insulating coating composition for electrical steel sheets according to an embodiment of the present invention comprises 100 parts by weight of a metal phosphate, 30 to 170 parts by weight of silica, 20 to 105 parts by weight of a nitrate, 10 to 50 parts by weight of a boron compound, and 50 to 150 parts by weight of a shielding agent of at least one of dolomite, talc, carbonate, and feldspar.

## Description

### [Technical Field]

An embodiment of the present invention relates to an insulating coating composition for electrical steel sheet, an electrical steel sheet, and a method for manufacturing the same. Specifically, the present invention provides an insulating coating composition for electrical steel sheet, an electrical steel sheet, and a method for manufacturing the same, wherein the insulating coating composition, by appropriately combining its components, prevents film separation even in a high-temperature and high-humidity environment and provides excellent shielding and tension-imparting effects in a high frequency region for the electrical steel sheet.

### [Background Art]

An electrical steel sheet is a product used as a material for transformers, motors, and electrical appliances, and unlike general carbon steel that emphasizes processability such as mechanical properties, it is a functional product that emphasizes electrical properties. Required electrical properties include low iron loss, and high magnetic flux density, magnetic permeability, and space factor.

Electrical steel sheets are further classified into grain-oriented electrical steel sheets and non-oriented electrical steel sheets. A grain-oriented electrical steel sheet is an electrical steel sheet having excellent magnetic properties in the rolling direction by forming a Goss texture ({110}<001> texture) throughout the steel sheet using an abnormal grain growth phenomenon called secondary recrystallization. A non-oriented electrical steel sheet is an electrical steel sheet having uniform magnetic properties in all directions in the plane of the rolled sheet.

Meanwhile, the formation of an insulating coating is a process corresponding to a final manufacturing process of a product, and usually, in addition to electrical properties that suppress the occurrence of eddy currents, it requires continuous punchability to suppress wear of a mold when a plurality of sheets are laminated to form an iron core after punch processing into a predetermined shape; and after an SRA process for restoring magnetic properties by removing processing stress of the steel sheet, sticking resistance and surface adhesion that prevent adhesion between iron core steel sheets, and the like. In addition to these basic characteristics, excellent coating workability of a coating solution and solution stability usable for a long time after mixing are also required. Coating solutions used for this purpose include chromium coating based on chromic acid and phosphate coating based on phosphate.

Such a coating has excellent corrosion resistance. However, its weather resistance is poor and it has a disadvantage of being sticky. If the weather resistance is weak and it is sticky, a problem occurs in which the coatings adhere to each other when unwinding a wound coil. In addition, a stain pattern may occur on the surface due to various defects of the steel sheet.

### [Disclosure]

### [Technical Problem]

An object of an embodiment of the present invention is to provide an insulating coating composition for an electrical steel sheet, an electrical steel sheet, and a method for manufacturing the same. Specifically, an object of the present invention is to provide an insulating coating composition for an electrical steel sheet, an electrical steel sheet, and a method for manufacturing the same, wherein, by appropriately combining components of the insulating coating composition, the coating formed thereby does not separate even in a high-temperature and high-humidity environment, and the electrical steel sheet exhibits excellent shielding and tension-imparting effects in a high frequency region.

### [Technical Solution]

An insulating coating composition for electrical steel sheets according to an embodiment of the present invention comprises 100 parts by weight of a metal phosphate, 30 to 170 parts by weight of silica, 20 to 105 parts by weight of a nitrate, 10 to 50 parts by weight of a boron compound, and 50 to 150 parts by weight of a shielding agent of at least one of dolomite, talc, carbonate, and feldspar.

The insulating coating composition for electrical steel sheets according to an embodiment of the present invention may further comprise 1 to 10 parts by weight of a pigment.

The pigment may comprise at least one oxide of Mn, Fe, or Cu.

The metal phosphate may comprise at least one of Mg, Ca, Ba, Sr, Zn, and Al.

The nitrate may comprise at least one of aluminum nitrate (Al(NO₃)₃), cobalt nitrate (Co(NO₃)₂), calcium nitrate (Ca(NO₃)₂), strontium nitrate (Sr(NO₃)₂), zinc nitrate (Zn(NO₃)₂), manganese nitrate (Mn(NO₃)₂), magnesium nitrate (Mg(NO₃)₂), and silver nitrate (AgNO₃).

The nitrate may comprise at least two of aluminum nitrate (Al(NO₃)₃), cobalt nitrate (Co(NO₃)₂), calcium nitrate (Ca(NO₃)₂), strontium nitrate (Sr(NO₃)₂), zinc nitrate (Zn(NO₃)₂), manganese nitrate (Mn(NO₃)₂), magnesium nitrate (Mg(NO₃)₂), and silver nitrate (AgNO₃).

The boron compound may comprise at least one of borax (Borax) and boronic acid (Boronic acid).

The boron compound may comprise at least one of methyl boronic acid and propenyl boronic acid.

The silica may have a pH of 8 to 12.

The shielding agent may comprise at least two of dolomite, talc, carbonate, and feldspar.

An electrical steel sheet according to an embodiment of the present invention comprises an electrical steel sheet substrate and an insulating coating positioned on a surface of the electrical steel sheet substrate, wherein the insulating coating comprises 100 parts by weight of a metal phosphate, 30 to 170 parts by weight of silica, 20 to 105 parts by weight of a nitrate, 10 to 50 parts by weight of a boron compound, and 50 to 150 parts by weight of a shielding agent of at least one of dolomite, talc, carbonate, and feldspar.

A method for manufacturing an electrical steel sheet according to an embodiment of the present invention comprises preparing an electrical steel sheet substrate; applying an insulating coating composition to a surface of the electrical steel sheet substrate; and heat-treating the electrical steel sheet substrate, wherein the insulating coating composition comprises 100 parts by weight of a metal phosphate, 30 to 170 parts by weight of silica, 20 to 105 parts by weight of a nitrate, 10 to 50 parts by weight of a boron compound, and 50 to 150 parts by weight of a shielding agent of at least one of dolomite, talc, carbonate, and feldspar.

The heat-treating step may be performed at a temperature of 700 to 1000°C for 10 seconds to 300 seconds.

### [Advantageous Effects]

According to an embodiment of the present invention, it exhibits excellent durability and extreme corrosion resistance in a high-temperature and high-humidity environment, and further exhibits excellent heat resistance even at very high temperatures used for processing, such as stress relief annealing (SRA).

According to an embodiment of the present invention, the present invention provides very excellent shielding and tension-imparting effects in a high-frequency magnetic field environment.

### [Brief Description of the Drawings]

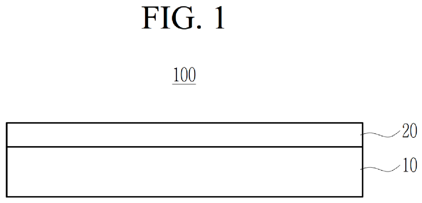

Fig. 1 is a schematic diagram of a cross-section of an electrical steel sheet according to an embodiment of the present invention.

### [Mode for Invention]

Terms such as first, second and third are used to describe various parts, components, regions, layers and/or sections, but are not limited thereto. These terms are only used to distinguish one part, component, region, layer or section from another part, component, region, layer or section. Accordingly, a first part, component, region, layer or section described below may be referred to as a second part, component, region, layer or section without departing from the scope of the present invention.

The terminology used herein is for the purpose of referring to specific embodiments only and is not intended to limit the present invention. As used herein, the singular forms include the plural forms as well unless the context clearly indicates otherwise. The meaning of "comprising" as used in the specification specifies a specific characteristic, region, integer, step, operation, element and/or component, and does not exclude the presence or addition of another characteristic, region, integer, step, operation, element and/or component.

When a part is referred to as being "above" or "on" another part, it may be directly above or on the other part, or another part may be interposed therebetween. In contrast, when a part is referred to as being "directly above" another part, no other part is interposed therebetween.

Unless defined otherwise, all terms including technical and scientific terms used herein have the same meaning as commonly understood by one of ordinary skill in the art to which the present invention belongs. Terms defined in commonly used dictionaries are further interpreted as having a meaning consistent with the related technical documents and the currently disclosed content, and are not interpreted in an ideal or very formal sense unless defined otherwise.

Hereinafter, embodiments of the present invention will be described in detail with reference to the accompanying drawings so that those of ordinary skill in the art to which the present invention belongs may easily implement the same. However, the present invention may be implemented in various different forms and is not limited to the embodiments described herein.

An insulating coating composition for electrical steel sheets according to an embodiment of the present invention comprises 100 parts by weight of a metal phosphate, 30 to 170 parts by weight of silica, 20 to 105 parts by weight of a nitrate, 10 to 50 parts by weight of a boron compound, and 50 to 150 parts by weight of a shielding agent of at least one of dolomite, talc, carbonate, and feldspar.

Hereinafter, each component will be described in detail. In an embodiment of the present invention, parts by weight mean a relative weight ratio based on 100 parts by weight of a metal phosphate, wherein the ratio is based on the solid content of each component. The solid content refers to a weight when each component is dried in a state where there are no volatile components such as a solvent. Specifically, it refers to a weight remaining after heat treatment, assuming a heat treatment process during formation of an insulating coating.

The metal phosphate acts as a binder in the insulating coating composition. When a proper amount of the metal phosphate is not included, adhesion of the insulating coating is inferior, or sufficient tensile strength cannot be obtained. The metal phosphate may be manufactured by a manufacturing process comprising adding a metal oxide to pure phosphoric acid (H₃PO₄) and reacting them. In order to improve the adhesion of the metal phosphate, a condensation reaction between the metal phosphate and boric acid may be induced by additionally adding boric acid during the reaction process and maintaining it for 3 hours or more, and this condensation reaction product may also be used instead of the metal phosphate. In an embodiment of the present invention, the term 'metal phosphate' encompasses not only metal phosphate but also a condensation reaction product of metal phosphate and boric acid. The manufactured metal phosphate is strongly acidic.

A metal phosphate may be added to the composition using a solution having a solid content of 50 to 70% by weight. At this time, if the solid content in the solution is too small, free phosphoric acid in the metal phosphate increases, so that surface moisture absorption may occur after manufacturing the metal phosphate, and if the solid content is too large, reaction failure and precipitation may occur due to an excess of solid content relative to pure phosphoric acid.

The metal phosphate and the metal oxide may include various metals without limitation. Specifically, the metal of the metal phosphate and the metal oxide may include at least one of Mg, Ca, Ba, Sr, Zn, and Al. More specifically, the metal phosphate may include at least one of monomagnesium phosphate (Mg(H₂PO₄)₂) and monoaluminum phosphate (Al(H₂PO₄)₃). More specifically, it may include monomagnesium phosphate (Mg(H₂PO₄)₂) and monoaluminum phosphate (Al(H₂PO₄)₃). In this case, the metal phosphate may include, based on the solid content, 10 to 90 parts by weight of monoaluminum phosphate and 10 to 90 parts by weight of monomagnesium phosphate with respect to 100 parts by weight of the total. When too little monoaluminum phosphate is included, the tension improvement effect by the addition of monoaluminum phosphate may not be sufficient. When too much monoaluminum phosphate is added, the Al component may increase crystallization of silica, thereby causing cracks in the insulating coating. Specifically, the metal phosphate may include, based on the solid content, 20 to 80 parts by weight of monoaluminum phosphate and 20 to 80 parts by weight of monomagnesium phosphate with respect to 100 parts by weight of the total, and more specifically, may include 30 to 70 parts by weight of monoaluminum phosphate and 30 to 70 parts by weight of monomagnesium phosphate.

An insulating coating composition for electrical steel sheets according to an embodiment of the present invention comprises 30 to 170 parts by weight of silica with respect to 100 parts by weight of a metal phosphate.

Silica is a component necessary to reduce iron loss by imparting tension to the steel sheet. When too little silica is included, it is difficult to sufficiently obtain a tension-imparting effect on the steel sheet. When too much silica is included, problems may occur in stickiness or solution stability. More specifically, 35 to 160 parts by weight of silica is included per 100 parts by weight of the metal phosphate. More specifically, 39 to 100 parts by weight of silica is included per 100 parts by weight of the metal phosphate.

The silica may include basic and acidic silica, and more specifically, may include basic silica. When basic silica is included, it is advantageous in terms of stability of the insulating coating composition, and storage stability of the solution may be improved. The basic silica may have a pH of 8 to 12. The pH of the silica may be measured in a sol form.

The silica may have an average particle diameter in a range of 5 to 20 nm. When the average particle diameter of the silica is too small, a condensation reaction rate is fast, so that an aggregation phenomenon occurs, and a color variation defect may be caused on the surface. When the average particle diameter is too large, the surface area per unit mass becomes small, so that the condensation reaction rate becomes slow, and defects may occur accordingly. More specifically, the silica may have an average particle diameter in a range of 10 to 15 nm. In one embodiment of the present invention, the particle diameter may be measured with a particle size analyzer capable of measuring Zeta Potential, and the average particle diameter is an arithmetic average.

The silica may be composed of at least one nanoparticle having different average particle diameters. Specifically, the silica may be used by mixing at least one or more silica nanoparticles having different average particle diameters in order to form an insulating coating having excellent coating characteristics.

An insulating coating composition for electrical steel sheets according to an embodiment of the present invention comprises 20 to 105 parts by weight of a nitrate with respect to 100 parts by weight of a metal phosphate.

The nitrate contributes to improved corrosion resistance and weather resistance. In addition, it also serves as a dispersant to stably disperse the shielding agent to be described later within the insulating coating composition. In particular, when used as an insulating coating for grain-oriented electrical steel sheet, the use of an organic dispersant is difficult, and the nitrate functions as the dispersant. If the nitrate is included in too small an amount, it is difficult to adequately achieve the aforementioned functions. If the nitrate is included in too large an amount, there is a risk of fire. More specifically, the composition contains 25 to 100 parts by weight of the nitrate per 100 parts by weight of the metal phosphate.

The nitrate may comprise at least one selected from the group consisting of aluminum nitrate (Al(NO₃)₃), cobalt nitrate (Co(NO₃)₂), calcium nitrate (Ca(NO₃)₂), strontium nitrate (Sr(NO₃)₂), zinc nitrate (Zn(NO₃)₂), manganese nitrate (Mn(NO₃)₂), magnesium nitrate (Mg(NO₃)₂), and silver nitrate (AgNO₃).

The nitrate may comprise at least two selected from the group consisting of aluminum nitrate (Al(NO₃)₃), cobalt nitrate (Co(NO₃)₂), calcium nitrate (Ca(NO₃)₂), strontium nitrate (Sr(NO₃)₂), zinc nitrate (Zn(NO₃)₂), manganese nitrate (Mn(NO₃)₂), magnesium nitrate (Mg(NO₃)₂), and silver nitrate (AgNO₃). When comprising two or more nitrates, it is advantageous in terms of improving the shielding effect. More specifically, the nitrate may comprise aluminum nitrate (Al(NO₃)₃) and magnesium nitrate (Mg(NO₃)₂). In this case, each may comprise 10 to 50 parts by weight. More specifically, each may comprise 13 to 50 parts by weight.

An insulating film composition for electrical steel sheets according to an embodiment of the present invention comprises 10 to 50 parts by weight of a boron compound with respect to 100 parts by weight of a metal phosphate. The boron compound may further improve the tensile strength of the insulating film by imparting porosity to the insulating film. When the boron compound is included in too small an amount, it is difficult to sufficiently achieve the above-mentioned role. When the boron compound is included in too large an amount, gelation may occur, which may cause problems in terms of solution stability. More specifically, 12 to 30 parts by weight of the boron compound may be included with respect to 100 parts by weight of the metal phosphate.

A boron compound may comprise one or more components selected from the group consisting of Borax and Boronic acid. The boronic acid may comprise one or more components selected from the group consisting of Methylboronic acid and Propenylboronic acid.

Borax is represented as Na₂B₄O₇ and may comprise decahydrate borax, pentahydrate borax, or anhydrous borax.

Boronic acid is represented by H₃BO₃, and may include one or more of methyl boronic acid and propenyl boronic acid.

An insulating coating composition for an electrical steel sheet according to an embodiment of the present invention comprises 50 to 150 parts by weight of a shielding agent, with respect to 100 parts by weight of a metal phosphate.

In an embodiment of the present invention, the shielding agent serves to improve insulation in an ultra-high frequency environment, and additionally exhibits the effect of making the surface color uniform. In an embodiment of the present invention, an ultra-high frequency environment refers to a band below 200GHz, and if the insulation is excellent, when applied to grain-oriented electrical steel sheets, it helps to improve electromagnetic shielding functionality at 50 to 70 Hz, more specifically 60 Hz, in the vicinity of facilities around transmission towers or high-voltage power lines. If the shielding agent is included in too small an amount, it may not adequately perform the aforementioned functions. If the shielding agent is added in too large an amount, the lifespan of the solution may be shortened. More specifically, the shielding agent may be included in an amount of 65 to 130 parts by weight. More specifically, the shielding agent may be included in an amount of 100 to 125 parts by weight.

The shielding agent may comprise one or more of dolomite, talc, carbonate, and feldspar. These materials are known as substances applied in the cosmetics, paint, and ceramics industries. Furthermore, they impart roughness to a surface and, by scattering and blocking light due to their crystal structure, serve to uniformize the color difference of the surface. However, these materials have a problem in that they are difficult to apply uniformly without using an organic polymer or an organic dispersant. In an embodiment of the present invention, by additionally adding the aforementioned nitrate, the shielding agent may be uniformly applied.

Dolomite is also called fossil, and its chemical formula is CaMg(CO₃)₂. Talc (talcum) is a magnesium-containing silicate mineral, represented by H₂Mg₃(SiO₃)₄ or Mg₃Si₄O₁₀(OH)₂. Carbonate is a salt of carbonic acid in which carbonate ions CO₃²⁻ are present. Specifically, it may include one or more of magnesium carbonate, barium carbonate, and calcium carbonate. Feldspar is a network-structured silicate mineral, and more specifically, it may include Albite (soda feldspar) and Orthoclase (potash feldspar). More specifically, as a shielding agent, it may include talc.

As the shielding agent, two or more types selected from the group consisting of dolomite, talc, carbonate, and feldspar may be included. When two or more types of the shielding agent are used, the shielding effect may be further enhanced. More specifically, the shielding agent may include talc and feldspar. In this case, each may be included in an amount of 25 to 70 parts by weight. More specifically, each may be included in an amount of 30 to 65 parts by weight.

Meanwhile, in one embodiment of the present invention, due to the addition of a shielding agent, the color may be different from existing products, and to compensate for this, a pigment may be added. The pigment may be added in an amount of 1 to 10 parts by weight. More specifically, the pigment may be included in an amount of 2 to 5 parts by weight.

As a pigment, it is not particularly limited, but may comprise at least one oxide selected from the group consisting of an oxide of Mn, an oxide of Fe, and an oxide of Cu. More specifically, it may comprise an oxide of Mn, an oxide of Fe, and an oxide of Cu.

In addition to the aforementioned components, the composition for forming an insulating film may further include a solvent. The solvent facilitates the application of the composition and disperses the components uniformly. The amount of the solvent is not particularly limited, but may be included in an amount of 100 to 1000 parts by weight based on 100 parts by weight of the metal phosphate.

Fig. 1 shows a schematic cross-sectional view of an electrical steel sheet (100) according to an embodiment of the present invention. As shown in Fig. 1, the electrical steel sheet (100) according to an embodiment of the present invention comprises an electrical steel sheet substrate (10) and an insulating film (20) located on the electrical steel sheet substrate (10).

The electrical steel sheet substrate (10) may be used without limitation for general non-oriented or grain-oriented electrical steel sheets. In one embodiment of the present invention, since forming an insulating coating (20) of a special component on the electrical steel sheet substrate (10) is a main configuration, a detailed description of the electrical steel sheet substrate (10) is omitted.

Supplementarily, the composition of the oriented electrical steel sheet substrate is as follows.

A grain-oriented electrical steel sheet substrate comprises 2.0 to 7.0 wt% of silicon (Si), 0.020 to 0.040 wt% of aluminum (Al), 0.01 to 0.20 wt% of manganese (Mn), 0.01 to 0.15 wt% of phosphorus (P), 0.01 wt% or less(excluding 0%) of carbon (C), 0.005 to 0.05 wt% of nitrogen (N), and 0.01 to 0.15 wt% of antimony (Sb), tin (Sn), or a combination thereof, wherein the remainder may include iron (Fe) and other unavoidable impurities. Since the description of each component of the grain-oriented electrical steel sheet substrate (10) is the same as generally known content, a detailed explanation thereof is omitted.

A metal oxide layer (base coating layer, primary coating), which is formed by reacting with an annealing separating agent and an oxide layer of the steel sheet during a secondary recrystallization process, may exist between the grain-oriented electrical steel sheet substrate and an insulating coating. An example of the metal oxide layer may be a forsterite layer. In the manufacturing process of the grain-oriented electrical steel sheet, it is also possible to suppress the formation of the metal oxide layer or to remove the metal oxide layer, such that the grain-oriented electrical steel sheet substrate and the insulating coating directly contact each other.

The thickness of the insulating coating (20) may be 0.5 to 10 µm. If the thickness of the insulating coating (20) is too thin, it is difficult to secure appropriate insulation properties. If the thickness of the insulating coating (20) is too thick, the space factor may decrease. In one embodiment of the present invention, appropriate insulation properties may be secured even if a thin insulating coating (20) is formed. More specifically, the thickness of the insulating coating (20) may be 1 to 5 µm.

The insulating coating 20 comprises 100 parts by weight of a metal phosphate, 30 to 170 parts by weight of silica, 20 to 105 parts by weight of a nitrate, 10 to 50 parts by weight of a boron compound, and 50 to 150 parts by weight of a shielding agent of at least one of dolomite, talc, carbonate, and feldspar. The insulating coating may be substantially identical to the solid content components in the aforementioned insulating coating composition.

A method for manufacturing an electrical steel sheet according to an embodiment of the present invention comprises preparing an electrical steel sheet substrate; applying an insulating coating composition to a surface of the electrical steel sheet substrate; and heat-treating the electrical steel sheet substrate.

Detailed descriptions regarding the electrical steel sheet substrate and the insulating coating composition have been provided above, and thus redundant explanations will be omitted.

For example, the substrate of the electrical steel sheet may be manufactured as follows.

A steel slab is prepared. Next, in this step, the steel slab is heated. At this time, the slab heating may be performed by a low-temperature slab method at 1,200°C or less. Next, the heated steel slab is hot-rolled to manufacture a hot-rolled sheet. Thereafter, the manufactured hot-rolled sheet may be hot-rolled annealed. Next, the hot-rolled sheet is cold-rolled to manufacture a cold-rolled sheet. Cold rolling may be performed once, or cold rolling may be performed two or more times including intermediate annealing. Next, the cold-rolled sheet is subjected to primary recrystallization annealing. At this time, the step of subjecting the cold-rolled sheet to primary recrystallization annealing may include a step of simultaneously decarburization annealing and nitridation annealing the cold-rolled sheet, or may include a step of nitridation annealing after decarburization annealing. Next, an annealing separator is applied on the surface of the recrystallization-annealed steel sheet. The application amount of the annealing separator may be 1 to 5 g/m². If the application amount of the annealing separator is too small, film formation may not be smoothly performed. If the application amount of the annealing separator is too large, it may affect secondary recrystallization. Therefore, the application amount of the annealing separator may be adjusted to the aforementioned range. Next, the steel sheet coated with the annealing separator is subjected to secondary recrystallization annealing. During secondary recrystallization annealing, the first soaking temperature may be 650 to 750 °C, and the second soaking temperature may be 1100 to 1250°C. In the temperature range of the temperature rising section, it may be controlled under a condition of 15 °C/hr. Furthermore, the gas atmosphere is performed in an atmosphere including 20 to 30 vol% nitrogen and 70 to 80 vol% hydrogen until the first soaking stage, and in the second soaking stage, after being maintained in a 100% hydrogen atmosphere for 15 hours, it may be furnace cooled.

In the heat-treating step, the heat-treating temperature may be 700 to 1000°C. If the temperature is too low, the time required for forming the insulating film may be excessively long, which may worsen continuous processing workability. If the temperature is too high, heat resistance and blueing resistance due to cracks may be deteriorated. More specifically, the heat-treating temperature may be 750 to 950°C. The heat-treating time may be 10 to 300 seconds. More specifically, it may be 30 to 180 seconds.

In the heat-treating step, the atmosphere may be a nitrogen atmosphere.

Preferred examples of the present invention, comparative examples contrasted therewith, and evaluation examples thereof will be described below. However, the following examples are only one preferred embodiment of the present invention, and the present invention is not limited to the following examples.

### Example 1

A grain-oriented electrical steel sheet (300*60mm) comprising 3.1% Si by weight ratio, having a thickness of 0.23mm, and having a primary coating that has undergone finish annealing, was prepared as a test sample.

An insulating film composition was prepared by mixing components at the ratios summarized in Table 1 below. First, basic colloidal silica (average particle size 15 nm) was added to a phosphate solution comprising 50 parts by weight of aluminum phosphate and 50 parts by weight of magnesium phosphate, and mixed. Thereafter, a nitrate solution comprising aluminum nitrate and magnesium nitrate was added, and then a shielding agent and anhydrous borax were added to finally prepare the insulating film composition.

The manufactured solution was applied to both surfaces of the electrical steel sheet at 3.1 g/mm², and heat-treated at 850°C for 45 seconds to form an insulating film with a thickness of 1 µm.

Weatherability, corrosion resistance, solution stability, coatability, heat-resistant adhesion, and ultra-high frequency insulation were evaluated by the following method and are summarized in Table 2.

### Weather resistance evaluation

Weather resistance was evaluated under conditions of 98% moisture, 60°C, and 72 hours, wherein 'OK' indicated good performance and 'NG' indicated poor performance.

### Corrosion resistance evaluation

A salt spray test was performed for 8 hours under conditions of 5% NaCl, 100% relative humidity, and 65 °C. The results were marked as 'OK' for satisfactory outcomes and 'NG' for unsatisfactory outcomes.

### Solution stability evaluation

A 2x2 cm sized coated plate is dissolved in 100ml of 10% NaOH, followed by filtration. The substance existing as an undissolved powder is PO₄. After measuring the weight of the powder remaining on the filter, if the powder is present, it may be determined that HPO₄ has been removed by an oxidizing agent.

Cl tracking method: After dissolving a 2 x 2 cm coating in 100 mL of 10% NaOH solution, if a Cl component exists in the solution, it may be considered that Cl was added.

### Coatability evaluation

When visually evaluated, if no stains were present and it was determined to be satisfactory, it was marked 'OK'; if stains were present and it was determined to be unsatisfactory, it was marked 'NG'.

### Heat resistant adhesion Evaluation

For the heat-resistant adhesion evaluation, heating was carried out for 2 hours at 560 °C under conditions of 20 % hydrogen and 80 % nitrogen. Subsequently, it was confirmed to be 5B or higher through a cross-hatch cut test.

When the result of the aforementioned test was 5B or higher, it was marked as 'OK' indicating a satisfactory condition, and when it was less than 5B, it was marked as 'NG' indicating an unsatisfactory condition.

### Tension evaluation

A specimen is placed on a base, and an upper point where the specimen is bent from the base is marked. The distance between the upper point and the position of the specimen before bending is measured and input as the length of the maximum flexure (H). Then, the measurement is performed as follows. If the value of the tension is 8x10⁻⁶ or more, it is indicated as OK, and if it is less than 8x10⁻⁶, it is indicated as NG. $σ = E / \left(1-v\right) x {T}^{2} / 3 t x 2 {H / l}^{2}$
σ = film tension (Kg/mm)
ν = Poisson's ratio (0.3)
t = thickness after coating removal (mm)
T = thickness before removal of coating (mm)
H = length of the maximum flexure portion (mm)
I = length of the test piece (mm)

### Shielding performance evaluation

The measurement was performed according to ASTM D4953. First, a specimen having an outer diameter of 130 mm and an inner diameter of 70 mm was inserted between upper and lower shield chambers, and then a shielding measurement was performed using a network analyzer. Next, a specimen having an outer diameter of 130 mm was inserted and measured by the same method. The shielding property was evaluated by determining the shielding rate from the difference between the first and second measurements.

**[Table 1]**

| Category (parts by weight) | Phosphate | Silica | Magnesium nitrate | Aluminum nitrate | Talc | Feldspar | Borax |
|---|---|---|---|---|---|---|---|
| 1 | 100 | 39 | 13 | 13 | 60 | 60 | 13 |
| 2 | 100 | 39 | 0 | 26 | 60 | 60 | 13 |
| 3 | 100 | 39 | 26 | 0 | 60 | 60 | 13 |
| 4 | 100 | 39 | 3 | 3 | 60 | 60 | 13 |
| 5 | 100 | 39 | 0 | 0 | 60 | 60 | 13 |
| 6 | 100 | 39 | 25 | 0 | 60 | 60 | 13 |
| 7 | 100 | 39(acidic) | 13 | 13 | 60 | 60 | 13 |
| 8 | 100 | 39 | 7 | 7 | 60 | 60 | 13 |
| 9 | 100 | 39 | 13 | 13 | 60 | 10 | 13 |
| 10 | 100 | 39 | 13 | 13 | 60 | 100 | 13 |
| 11 | 100 | 39 | 13 | 13 | 20 | 20 | 13 |
| 12 | 100 | 39 | 13 | 13 | 100 | 100 | 13 |
| 13 | 100 | 39 | 13 | 13 | 60 | 60 | 5 |
| 14 | 100 | 39 | 13 | 13 | 60 | 60 | 85 |
| 15 | 100 | 39 | 13 | 13 | 60 | 60 | 0 |
| 16 | 100 | 39 | 13 | 13 | 0 | 60 | 13 |
| 17 | 100 | 39 | 13 | 13 | 60 | 0 | 13 |
| 18 | 100 | 80 | 50 | 50 | 60 | 60 | 13 |
| 19 | 100 | 80 | 5 | 5 | 60 | 60 | 13 |
| 20 | 100 | 80 | 25 | 25 | 60 | 60 | 13 |
| 21 | 100 | 160 | 13 | 13 | 60 | 60 | 13 |
| 22 | 100 | 195 | 61 | 61 | 60 | 60 | 13 |
| 23 | 100 | 39 | 105 | 0 | 60 | 60 | 13 |
| 24 | 100 | 39 | 0 | 105 | 60 | 60 | 13 |
| 25 | 100 | 39 | 79 | 0 | 60 | 60 | 13 |
| 26 | 100 | 39 | 0 | 79 | 60 | 60 | 13 |
| 27 | 100 | 39 | 66 | 13 | 60 | 60 | 13 |
| 28 | 100 | 39 | 13 | 66 | 60 | 60 | 13 |
| 29 | 100 | 39 | 0 | 53 | 60 | 60 | 13 |

**[Table 2]**

| Categor y | Weather resistanc e | Corrosion resistanc e | Solutio n stability | Coatabilit y | Heat-resistant adhesio n | Tensio n | Shieldin 9 property | Category |
|---|---|---|---|---|---|---|---|---|
| 1 | OK | OK | OK | OK | OK | OK | OK | Example |
| 2 | OK | OK | OK | OK | OK | OK | NG | Comparativ e Example |
| 3 | OK | OK | OK | OK | OK | OK | NG | Comparativ e Example |
| 4 | OK | NG | NG | OK | OK | OK | OK | Comparativ e Example |
| 5 | OK | NG | NG | OK | OK | OK | OK | Comparativ e Example |
| 6 | OK | OK | OK | OK | OK | OK | NG | Comparativ e Example |
| 7 | OK | OK | NG | NG | OK | OK | OK | Comparativ e Example |
| 8 | NG | NG | NG | NG | NG | OK | NG | Comparativ e Example |
| 9 | OK | OK | OK | OK | OK | OK | NG | Comparativ e Example |
| 10 | OK | OK | NG | NG | OK | OK | OK | Comparativ e Example |
| 11 | OK | OK | OK | OK | OK | OK | NG | Comparativ e Example |
| 12 | OK | OK | NG | OK | OK | OK | OK | Comparativ e Example |
| 13 | OK | OK | OK | OK | OK | NG | OK | Comparativ e Example |
| 14 | OK | OK | NG | OK | OK | OK | OK | Comparativ e Example |
| 15 | OK | OK | OK | OK | OK | NG | OK | Comparativ e Example |
| 16 | OK | OK | NG | OK | OK | OK | NG | Comparativ e Example |
| 17 | OK | OK | OK | OK | OK | OK | NG | Comparativ e Example |
| 18 | OK | OK | OK | OK | OK | OK | OK | Example |
| 19 | NG | NG | NG | OK | OK | OK | OK | Comparativ e Example |
| 20 | OK | OK | 0K | OK | OK | OK | OK | Example |
| 21 | OK | OK | 0K | OK | OK | OK | OK | Example |
| 22 | OK | OK | NG | OK | OK | OK | OK | Comparativ e Example |
| 23 | OK | OK | NG | OK | OK | OK | OK | Comparativ e Example |
| 24 | OK | OK | NG | OK | OK | OK | OK | Comparativ e Example |
| 25 | OK | OK | OK | NG | OK | OK | OK | Comparativ e Example |
| 26 | OK | OK | OK | NG | OK | OK | OK | Comparativ e Example |
| 27 | OK | OK | OK | OK | OK | OK | OK | Example |
| 28 | OK | OK | OK | OK | OK | OK | OK | Example |
| 29 | OK | OK | OK | OK | OK | NG | OK | Comparativ e Example |

As shown in Tables 1 and 2, it may be confirmed that when components of the insulating coating composition are included in appropriate amounts, weather resistance, corrosion resistance, solution stability, coatability, heat-resistant adhesion, tension, and shielding property are simultaneously excellent. On the other hand, it may be confirmed that when components of the insulating coating composition are not properly included, some characteristics are inferior.

The present invention is not limited to the above embodiments but may be manufactured in various different forms, and those of ordinary skill in the art to which the present invention belongs will understand that the present invention may be implemented in other specific forms without changing the technical spirit or essential features of the present invention. Therefore, it should be understood that the embodiments described above are exemplary in all respects and not restrictive.

**[Description of symbols]**

| | | | |
|---|---|---|---|
| 100: | Electrical steel sheet | 10: | Electrical steel sheet substrate |
| 20: | Insulating coating | | |

## Claims

1. An insulating coating composition for electrical steel sheets comprising:
100 parts by weight of a metal phosphate,
30 to 170 parts by weight of silica,
20 to 105 parts by weight of a nitrate,
10 to 50 parts by weight of a boron compound, and
50 to 150 parts by weight of a shielding agent of at least one of dolomite, talc, carbonate, and feldspar.

2. The insulating coating composition for electrical steel sheets of claim 1,
further comprising 1 to 10 parts by weight of a pigment.

3. The insulating coating composition for electrical steel sheets of claim 2,
wherein the pigment comprises at least one oxide of Mn, Fe, and Cu.

4. The insulating coating composition for electrical steel sheets of claim 1,
wherein the metal phosphate comprises at least one of Mg, Ca, Ba, Sr, Zn, and Al.

5. The insulating coating composition for electrical steel sheets of claim 1,
wherein the nitrate comprises at least one of aluminum nitrate, cobalt nitrate, calcium nitrate, strontium nitrate, zinc nitrate, manganese nitrate, magnesium nitrate, and silver nitrate.

6. The insulating coating composition for electrical steel sheets of claim 1,
wherein the nitrate comprises at least two of aluminum nitrate, cobalt nitrate, calcium nitrate, strontium nitrate, zinc nitrate, manganese nitrate, magnesium nitrate, and silver nitrate.

7. The insulating coating composition for electrical steel sheets of claim 1,
wherein the boron compound comprises at least one of borax and boronic acid.

8. The insulating coating composition for electrical steel sheets of claim 1,
wherein the boron compound comprises at least one of methyl boronic acid and propenyl boronic acid.

9. The insulating coating composition for electrical steel sheets of claim 1,
wherein the silica has a pH of 8 to 12.

10. The insulating coating composition for electrical steel sheets of claim 1,
wherein the shielding agent comprises at least two of dolomite, talc, carbonate, and feldspar.

11. An electrical steel sheet comprising:
an electrical steel sheet substrate and an insulating coating positioned on a surface of the electrical steel sheet substrate,
wherein the insulating coating comprises 100 parts by weight of a metal phosphate, 30 to 170 parts by weight of silica, 20 to 105 parts by weight of a nitrate, 10 to 50 parts by weight of a boron compound, and 50 to 150 parts by weight of a shielding agent of at least one of dolomite, talc, carbonate, and feldspar.

12. A method for manufacturing an electrical steel sheet comprising:
preparing an electrical steel sheet substrate; applying an insulating coating composition to a surface of the electrical steel sheet substrate; and heat-treating the electrical steel sheet substrate,
wherein the insulating coating composition comprises 100 parts by weight of a metal phosphate, 30 to 170 parts by weight of silica, 20 to 105 parts by weight of a nitrate, 10 to 50 parts by weight of a boron compound, and 50 to 150 parts by weight of a shielding agent least one of dolomite, talc, carbonate, and feldspar.

13. The method for manufacturing an electrical steel sheet of claim 12,
wherein the heat-treating step is performed at a temperature of 700 to 1000°C for 10 seconds to 300 seconds.
